# EUROPEAN PATENT SPECIFICATION

(11) **EP 4 044 036 B1**
(45) Date of publication and mention of the grant of the patent: **28.10.2026**
(21) Application number: 21156743.3
(22) Date of filing: 12.02.2021
(51) Int. Cl.: G06F 11/362, G06F 11/3698

(54) **INTEGRATION OF DEBUG PROBES INTO WEB-BASED INTEGRATED DEVELOPMENT ENVIRONMENTS**
INTEGRATION VON DEBUGGING-SONDEN IN WEB-BASIERTE INTEGRIERTE ENTWICKLUNGSUMGEBUNGEN
INTÉGRATION DE SONDES DE DÉBOGAGE DANS DES ENVIRONNEMENTS DE DÉVELOPPEMENT INTÉGRÉS BASÉS SUR LE WEB

(43) Date of publication of application: 17.08.2022
(73) Proprietor: Tridonic GmbH & Co. KG, 6851 Dornbirn (AT)
(72) Inventor: Becker, Markus, 6850 Dornbirn (AT)
(74) Representative: Rupp, Christian

(56) References cited:
- US-A1- 2010 107 146

## Description

### Technical Field

The present invention relates to embedded software engineering. In particular, the present invention relates to an adapter device for connecting a web-based integrated development environment (IDE) and a debug interface of a microcontroller, a system comprising the adapter device, and a method of programming the microcontroller using the web-based IDE.

### Background Art

Web-based IDEs, also known as online IDEs or cloud-based IDEs, allow for software engineering in a portable browser-based work environment. With respect to embedded software engineering, web-based IDEs currently fail to support debugging. For example, debug probes cannot be passed into a web browser. Thus, an executable program needs to be downloaded and flashed to the target microcontroller manually, and debugging is carried out outside of the web browser.

US 2010/0107146 A1 shows a development system including a web server, a computer terminal and a test platform. The webserver provides an IDE which can be loaded to the terminal and be used to debug the target processor of the test platform.

### Summary of the Invention

The object of the present invention is thus to improve an embedded software engineering workflow based on web-based IDEs.

The invention is defined by the appended independent claims. Preferred embodiments are set forth in the dependent claims and in the following description and drawings.

### Advantageous Effects of the Invention

In accordance with the present disclosure, debugging support for embedded controllers may be added by using WebUSB technology on debug probes to be able to pass USB devices to the browser or, in other words, to integrate debug probes into web-based IDEs, since the debug probe may then be detected by the browser. It is thus possible to have a complete embedded software engineering workflow in a web browser.

Further advantages include
- a possibility of remote debugging,
- no requirement of local installation on developer PCs,
- reduced installation time for new members of software engineering teams, and
- alignment of software engineering tool chain and versions within software engineering teams and thus less errors due to discrepancies related to the tools.

### Brief Description of the Drawings

Further aspects, advantages and objects of the invention will become evident for the skilled reader by means of the following detailed description of the embodiments of the invention, when taking into conjunction with the figures of the enclosed drawings.
- FIG. 1: illustrates an adapter device according to a first aspect of the present disclosure;
- FIG. 2: illustrates a system according to a second aspect of the present disclosure; and
- FIG. 3: illustrates a method according to a third aspect of the present disclosure.

### Detailed Descriptions of Embodiments

The invention will now be described with respect to various embodiments. The features of these embodiments may be combined with each other unless specified otherwise.

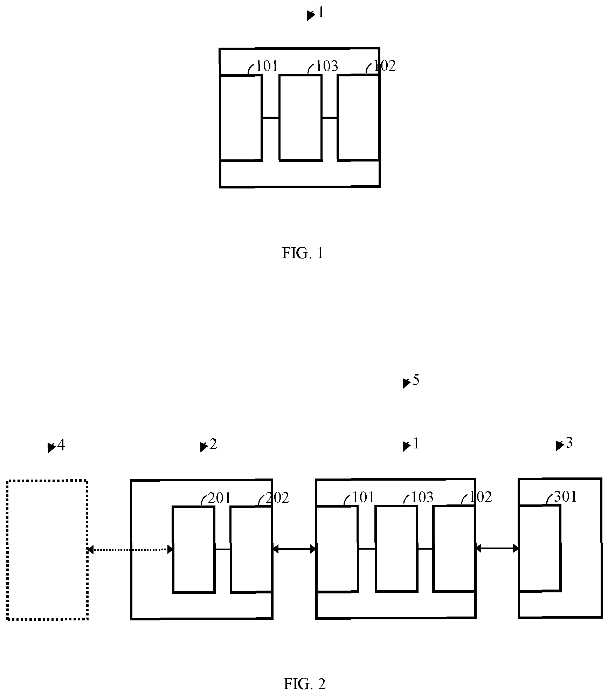

FIG. 1 illustrates an adapter device 1 according to a first aspect of the present disclosure.

The adapter device 1 is for connecting a web-based IDE 201 and a debug interface 301 of a microcontroller 3 (see FIG. 2).

A web-based IDE as used herein, also known as online IDE or cloud-based DIE, may refer to a system that allows for software engineering in a portable browser-based work environment.

A debug interface as used herein may refer to a chip-level interface of an integrated circuit (IC), such as a microcontroller (µC), to particularly aid development, programming and in-circuit debugging of programs executable by said IC. A debug interface is not necessary for end-use function and is often hidden or disabled in finished products. Examples of debug interfaces include JTAG and SWD interfaces (see below).

A microcontroller as used herein may refer to a computer on an IC, including a number of central processing units (CPUs) or processor cores, memory, and programmable input/output peripherals.

In accordance with FIG. 1, the adapter device 1 comprises a first communication interface 101, a second communication interface 102, and a processor 103.

A processor as used herein may refer to a CPU having a number of processor cores.

The first communication interface 101 is configured to exercise a first communication protocol and connectable to a web client 2 (see FIG. 2) configured to execute the web-based IDE 201.

A web client as used herein may refer to a role of a requester of a web service in a client-server model. The server provides a function or service, such as a hosted web page or web app, to one or more clients which request such functions or services and render/present the function or service to a user.

In particular, the first communication interface 101 may comprise an USB interface.

In particular, the first communication protocol may be for communication with a WebUSB API of the web client 2.

WebUSB API as used herein may refer to an application programming interface (API) that enables exposing USB device services to the web, so that the exposed services may be used in a web browser.

The second communication interface 102 is configured to exercise a second communication protocol and connectable to the debug interface 301 (see FIG. 2) of the microcontroller 3.

In particular, the second communication interface 102 may comprise a multi-pin electrical interface, for example a two-pin interface.

In particular, the second communication protocol may be for communication with the debug interface 301 of the microcontroller 3.

In particular, the second communication protocol may be for communication with a Joint Test Action Group (JTAG) debug interface of the microcontroller 3, or for communication with a Serial Wire Debug (SWD) interface of the microcontroller 3.

A JTAG interface as used herein may refer to a debug interface in accordance with an industry standard (IEEE 1149.1) for development, programming and in-circuit debugging of programs executable in embedded systems.

A SWD interface as used herein may refer to a non-JTAG debug interface in accordance with a proprietary specification.

The processor 103 is configured to convert between the first communication protocol and the second communication protocol.

The adapter device 1 may further comprise a debug probe.

A debug probe as used herein may refer to a device used to control a target IC at a level of individual processor registers, program counter, and instructions within the IC. It allows the processor to be single-stepped or for breakpoints to be set, at which program execution is interrupted for inspection.

FIG. 2 illustrates a system 5 according to a second aspect of the present disclosure.

The system 5 comprises an adapter device 1 according to the first aspect of the present disclosure, a web client 2 and a microcontroller 3.

The web client 2 is configured to execute a web-based IDE 201.

The microcontroller 3 comprises a debug interface 301.

The adapter device 1 is for connecting the web-based IDE 201 of the web client 2 and the debug interface 301 of the microcontroller 3.

The web client 2 may be configured to generate 603 an executable program for the microcontroller 3 using the web-based IDE 201.

In particular, the executable program may be generated 603A on the web client 2. Alternatively, a web server 4 connectable to the web-based IDE 201 may be provided to generate 603B the executable program.

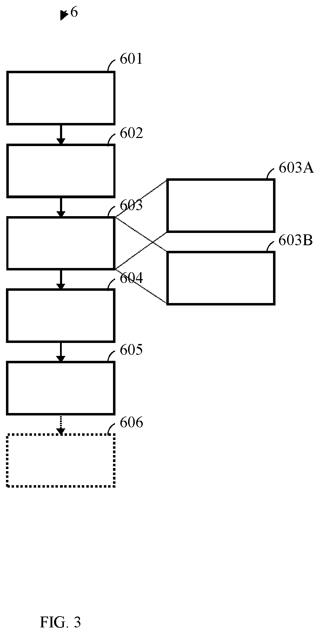

FIG. 3 illustrates a method 6 according to a third aspect of the present disclosure.

The method 6 is for programming a microcontroller 3 using a web-based IDE 201.

The method 6 comprises a step of connecting 601 a first communication interface 101 of an adapter device 1 to a corresponding communication interface 202 of a web client 2 configured to execute the web-based IDE 201.

The method 6 further comprises a step of connecting 602 a second communication interface 102 of the adapter device 1 to a debug interface 301 of a microcontroller 3.

The method 6 further comprises a step of generating 603 an executable program for the microcontroller 3 using the web-based IDE 201.

In particular, the step of generating 603 the executable program may comprise generating 603A the executable program on the web client 2.

Alternatively, the step of generating 603 the executable program may comprise generating 603B the executable program on a web server 4 connectable to the web-based IDE 201.

A web server as used herein may refer to a role of a provider of a web service in a client-server model. The server provides a function or service, such as a hosted web page or web app, to one or more clients which request such functions or services and render/present the function or service to a user.

The method 6 further comprises a step of sending 604 the executable program via the corresponding communication interface 202 in accordance with a first communication protocol exercised by the first communication interface 101 of the adapter device 1.

The method 6 further comprises a step of converting 605 between the first communication protocol and a second communication protocol exercised by the second communication interface 102.

In particular, the method 6 may further comprise a step of debugging 606 the executable program being executed on the microcontroller 3 using the web-based IDE 201.

Debugging as used herein may refer to a software engineering process of finding and resolving bugs (i.e., defects or problems that prevent correct operation) within executable programs.

In particular, the method 6 may be performed by the system 5 according to the second aspect of the present disclosure.

## Claims

1. An adapter device (1) for connecting a web-based IDE (201) and a debug interface (301) of a microcontroller (3), comprising
a first communication interface (101)
configured to exercise a first communication protocol and
connectable to a corresponding communication interface (202) of a web client (2) configured to execute the web-based IDE (201), wherein the web client (2) is configured to generate an executable program for the microcontroller (3) using the web-based IDE (201), wherein the web client (2) is configured to send the executable program via its corresponding communication interface (202) in accordance with the first communication protocol;
a second communication interface (102)
configured to exercise a second communication protocol and
connectable to the debug interface (301) of the microcontroller (3); and
a processor (103)
configured to convert between the first communication protocol and the second communication protocol,
wherein the first communication interface (101) comprises a USB interface, and
wherein the first communication protocol is for communication with a WebUSB API of the web client (2),
wherein the second communication interface (102) comprises a multi-pin electrical interface and the second communication interface (102) is for communication with the debug interface (301) of the microcontroller (3), wherein the second communication protocol is for communication with a Joint Test Action Group (JTAG) debug interface or a Serial Wire Debug (SWD) interface of the microcontroller (3).

2. A system (5), comprising
a web client (2) configured to execute a web-based IDE (201);
a microcontroller (3) comprising a debug interface (301); and
an adapter device (1) of claim 1 for connecting the web-based IDE (201) and the debug interface (301) of the microcontroller (3).

3. A method (6) of programming a microcontroller (3) using a web-based IDE (201), comprising
connecting (601) a first communication interface (101) of an adapter device (1) to a corresponding communication interface (202) of a web client (2) configured to execute the web-based IDE (201);
connecting (602) a second communication interface (102) of the adapter device (1) to a debug interface (301) of a microcontroller (3);
generating (603) an executable program for the microcontroller (3) using the web-based IDE (201);
sending (604) the executable program via the corresponding communication interface (202) in accordance with a first communication protocol exercised by the first communication interface (101) of the adapter device (1); and
converting (605) between the first communication protocol and a second communication protocol exercised by the second communication interface (102),
wherein the first communication interface (101) comprises a USB interface, and
wherein the first communication protocol is for communication with a WebUSB API of the web client (2),
wherein the second communication interface (102) comprises a multi-pin electrical interface and the second communication interface (102) is for communication with the debug interface (301) of the microcontroller (3), wherein the second communication protocol is for communication with a Joint Test Action Group (JTAG) debug interface or a Serial Wire Debug (SWD) interface of the microcontroller (3).

4. The method (6) of claim 3,
the generating (603) the executable program comprising generating (603A) the executable program on the web client (2).

5. The method (6) of claim 3,
the generating (603) the executable program comprising generating (603B) the executable program on a web server (4) connectable to the web-based IDE (201).

6. The method (6) of any one of the claims 3 to 5, further comprising
debugging (606) the executable program being executed on the microcontroller (3) using the web-based IDE (201).

7. The method (6) of any one of the claims 3 to 6
being performed by the system (5) of claim 2.

## Patentansprüche

1. Adaptervorrichtung (1) zum Verbinden einer webbasierten integrierten Entwicklungsumgebung (IDE) (201) und einer Debug-Schnittstelle (301) eines Mikrocontrollers (3), umfassend
eine erste Kommunikationsschnittstelle (101),
• eingerichtet zur Ausführung eines ersten Kommunikationsprotokolls und
• verbindbar mit einer entsprechenden Kommunikationsschnittstelle (202) eines Web-Clients (2),
wobei der Web-Client (2) eingerichtet ist, unter Verwendung der webbasierten IDE (201) ein ausführbares Programm für den Mikrocontroller (3) zu erzeugen,
wobei der Web-Client (2) eingerichtet ist, das ausführbare Programm über seine entsprechende Kommunikationsschnittstelle (202) gemäß dem ersten Kommunikationsprotokoll zu senden;
eine zweite Kommunikationsschnittstelle (102),
• eingerichtet zur Ausführung eines zweiten Kommunikationsprotokolls und
• verbindbar mit der Debug-Schnittstelle (301) des Mikrocontrollers (3); und
einen Prozessor (103),
• eingerichtet zur Umsetzung zwischen dem ersten Kommunikationsprotokoll und dem zweiten Kommunikationsprotokoll,
wobei die erste Kommunikationsschnittstelle (101) eine USB-Schnittstelle umfasst, und
wobei das erste Kommunikationsprotokoll zur Kommunikation mit einer WebUSB-API des Web-Clients (2) vorgesehen ist,
wobei die zweite Kommunikationsschnittstelle (102) eine mehrpolige elektrische Schnittstelle umfasst und die zweite Kommunikationsschnittstelle (102) zur Kommunikation mit der Debug-Schnittstelle (301) des Mikrocontrollers (3) vorgesehen ist,
wobei das zweite Kommunikationsprotokoll zur Kommunikation mit einer Joint-Test-Action-Group-(JTAG-)Debug-Schnittstelle oder einer Serial-Wire-Debug-(SWD-)Schnittstelle des Mikrocontrollers (3) vorgesehen ist.

2. System (5), umfassend
einen Web-Client (2), der zur Ausführung einer webbasierten IDE (201) eingerichtet ist;
einen Mikrocontroller (3), der eine Debug-Schnittstelle (301) umfasst; und
eine Adaptervorrichtung (1) nach Anspruch 1 zum Verbinden der webbasierten IDE (201) und der Debug-Schnittstelle (301) des Mikrocontrollers (3).

3. Verfahren (6) zum Programmieren eines Mikrocontrollers (3) unter Verwendung einer webbasierten IDE (201), umfassend
Verbinden (601) einer ersten Kommunikationsschnittstelle (101) einer Adaptervorrichtung (1) mit einer entsprechenden Kommunikationsschnittstelle (202) eines Web-Clients (2), der zur Ausführung der webbasierten IDE (201) eingerichtet ist;
Verbinden (602) einer zweiten Kommunikationsschnittstelle (102) der Adaptervorrichtung (1) mit einer Debug-Schnittstelle (301) eines Mikrocontrollers (3);
Erzeugen (603) eines ausführbaren Programms für den Mikrocontroller (3) unter Verwendung der webbasierten IDE (201);
Senden (604) des ausführbaren Programms über die entsprechende Kommunikationsschnittstelle (202) gemäß einem ersten Kommunikationsprotokoll, das von der ersten Kommunikationsschnittstelle (101) der Adaptervorrichtung (1) ausgeführt wird; und
Umsetzen (605) zwischen dem ersten Kommunikationsprotokoll und einem zweiten Kommunikationsprotokoll, das von der zweiten Kommunikationsschnittstelle (102) ausgeführt wird,
wobei die erste Kommunikationsschnittstelle (101) eine USB-Schnittstelle umfasst, und
wobei das erste Kommunikationsprotokoll zur Kommunikation mit einer WebUSB-API des Web-Clients (2) vorgesehen ist,
wobei die zweite Kommunikationsschnittstelle (102) eine mehrpolige elektrische Schnittstelle umfasst und die zweite Kommunikationsschnittstelle (102) zur Kommunikation mit der Debug-Schnittstelle (301) des Mikrocontrollers (3) vorgesehen ist,
wobei das zweite Kommunikationsprotokoll zur Kommunikation mit einer Joint-Test-Action-Group-(JTAG-)Debug-Schnittstelle oder einer Serial-Wire-Debug-(SWD-)Schnittstelle des Mikrocontrollers (3) vorgesehen ist.

4. Verfahren (6) nach Anspruch 3,
wobei das Erzeugen (603) des ausführbaren Programms das Erzeugen (603A) des ausführbaren Programms auf dem Web-Client (2) umfasst.

5. Verfahren (6) nach Anspruch 3,
wobei das Erzeugen (603) des ausführbaren Programms das Erzeugen (603B) des ausführbaren Programms auf einem mit der webbasierten IDE (201) verbindbaren Web-Server (4) umfasst.

6. Verfahren (6) nach einem der Ansprüche 3 bis 5, ferner umfassend
Debuggen (606) des auf dem Mikrocontroller (3) ausgeführten ausführbaren Programms unter Verwendung der webbasierten IDE (201).

7. Verfahren (6) nach einem der Ansprüche 3 bis 6,
wobei das Verfahren durch das System (5) nach Anspruch 2 durchgeführt wird.

## Revendications

1. Dispositif adaptateur (1) destiné à connecter un environnement de développement intégré (IDE) basé sur le Web (201) et une interface de débogage (301) d'un microcontrôleur (3), comprenant :
une première interface de communication (101),
• configurée pour mettre en œuvre un premier protocole de communication et
• pouvant être connectée à une interface de communication correspondante (202) d'un client Web (2),
le client Web (2) étant configuré pour générer un programme exécutable pour le microcontrôleur (3) au moyen de l'IDE basé sur le Web (201),
le client Web (2) étant configuré pour envoyer le programme exécutable via son interface de communication correspondante (202) conformément au premier protocole de communication ;
une deuxième interface de communication (102),
• configurée pour mettre en œuvre un deuxième protocole de communication et
• pouvant être connectée à l'interface de débogage (301) du microcontrôleur (3) ; et
un processeur (103),
• configuré pour assurer une conversion entre le premier protocole de communication et le deuxième protocole de communication,
dans lequel la première interface de communication (101) comprend une interface USB, et
dans lequel le premier protocole de communication est destiné à communiquer avec une API WebUSB du client Web (2),
dans lequel la deuxième interface de communication (102) comprend une interface électrique multipoints et la deuxième interface de communication (102) est destinée à communiquer avec l'interface de débogage (301) du microcontrôleur (3),
le deuxième protocole de communication étant destiné à communiquer avec une interface de débogage Joint Test Action Group (JTAG) ou une interface Serial Wire Debug (SWD) du microcontrôleur (3).

2. Système (5), comprenant :
un client Web (2) configuré pour exécuter un IDE basé sur le Web (201) ;
un microcontrôleur (3) comprenant une interface de débogage (301) ; et
un dispositif adaptateur (1) selon la revendication 1 destiné à connecter l'IDE basé sur le Web (201) et l'interface de débogage (301) du microcontrôleur (3).

3. Procédé (6) de programmation d'un microcontrôleur (3) au moyen d'un IDE basé sur le Web (201), comprenant :
la connexion (601) d'une première interface de communication (101) d'un dispositif adaptateur (1) à une interface de communication correspondante (202) d'un client Web (2) configuré pour exécuter l'IDE basé sur le Web (201) ;
la connexion (602) d'une deuxième interface de communication (102) du dispositif adaptateur (1) à une interface de débogage (301) d'un microcontrôleur (3) ;
la génération (603) d'un programme exécutable pour le microcontrôleur (3) au moyen de l'IDE basé sur le Web (201) ;
l'envoi (604) du programme exécutable via l'interface de communication correspondante (202) conformément à un premier protocole de communication mis en œuvre par la première interface de communication (101) du dispositif adaptateur (1) ; et
la conversion (605) entre le premier protocole de communication et un deuxième protocole de communication mis en œuvre par la deuxième interface de communication (102),
dans lequel la première interface de communication (101) comprend une interface USB, et
dans lequel le premier protocole de communication est destiné à communiquer avec une API WebUSB du client Web (2),
dans lequel la deuxième interface de communication (102) comprend une interface électrique multipoints et la deuxième interface de communication (102) est destinée à communiquer avec l'interface de débogage (301) du microcontrôleur (3),
le deuxième protocole de communication étant destiné à communiquer avec une interface de débogage Joint Test Action Group (JTAG) ou une interface Serial Wire Debug (SWD) du microcontrôleur (3).

4. Procédé (6) selon la revendication 3,
la génération (603) du programme exécutable comprenant la génération (603A) du programme exécutable sur le client Web (2).

5. Procédé (6) selon la revendication 3,
la génération (603) du programme exécutable comprenant la génération (603B) du programme exécutable sur un serveur Web (4) pouvant être connecté à l'IDE basé sur le Web (201).

6. Procédé (6) selon l'une quelconque des revendications 3 à 5, comprenant en outre :
le débogage (606) du programme exécutable exécuté sur le microcontrôleur (3) au moyen de l'IDE basé sur le Web (201).

7. Procédé (6) selon l'une quelconque des revendications 3 à 6,
le procédé étant mis en œuvre par le système (5) selon la revendication 2.
